# EUROPÄISCHE PATENTSCHRIFT

(11) **EP 0 637 722 B1**
(45) Veröffentlichungstag und Bekanntmachung des Hinweises auf die Patenterteilung: **07.01.1999**
(21) Anmeldenummer: 94112209.5
(22) Anmeldetag: 04.08.1994
(51) Int. Cl.: F24F 5/00, F24D 11/00

(54) **Verfahren zur Temperaturregelung von Räumen in Gebäuden und Einrichtung zur Durchführung des Verfahrens**
Method for controlling the temperature of rooms in buildings and implementing device for the method
Procédé pour le réglage de la température des pièces dans des bâtiments et dispositif pour réaliser le procédé

(30) Priorität: 05.08.1993 DE 4326229
(43) Veröffentlichungstag der Anmeldung: 08.02.1995
(73) Patentinhaber: Schmitz, Johannes, Dr.-Ing., D-52428 Jülich (DE); Schmitz-Stotz, Patricia, Dipl.-Ing., D-52428 Jülich (DE)
(72) Erfinder: Schmitz, Johannes, Dr.-Ing., D-52428 Jülich (DE); Schmitz-Stotz, Patricia, Dipl.-Ing., D-52428 Jülich (DE)
(74) Vertreter: Castell, Klaus, Dr.-Ing.

(56) Entgegenhaltungen:
- AT-B- 332 599
- DE-B- 2 052 761
- DE-C- 2 547 387

## Beschreibung

Die Erfindung betrifft ein Verfahren zur Temperaturregelung von Räumen in Gebäuden mit einem Luftkreislauf, der durch den Zwischenraum zwischen den Außenwänden und einer weiteren Hülle geführt ist, und mit Wasserkreisläufen mindestens zu Heizzwecken sowie eine Einrichtung zur Durchführung dieses Verfahrens.

Ein Verfahren der eingangs beschriebenen Art ist bereits bekannt geworden durch die europ. Patentschrift mit der Veröffentlichungsnr. 0 236 704 B1. Auch das dort beschriebene Gebäude ist als Einrichtung zur Durchführung dieses Verfahrens geeignet.

Verfahren und Einrichtungen der bekannten Art haben sich ausgezeichnet in der Praxis bewährt. Eine vollständige Klimatisierung gelingt jedoch nicht befriedigend bzw. erfordert ein relativ großes Leistungsaufkommen, in der Regel zu ungünstigen Zeiten für ein Leistungsangebot durch das örtliche Energieversorgungsunternehmen. Dies gilt sowohl für eine Beheizung als auch für eine Kühlung.

Aus der DE-A-20 52 761 ist ein Verfahren zur Temperaturregelung von Räumen in Gebäuden mit einem Luftkreislauf und mit Wasserkreisläufen mindestens zu Heizzwecken bekannt, wobei das Gebäude eine wirksame Wärmedämmung aufweist. Bei dieser Schrift ist jedoch nicht vorgesehen, daß ein Luftkreislauf durch den Zwischenraum zwischen den Außenwänden und einer weiteren Hülle geführt ist und gerade die Wärme dieses Luftkreislaufs zur Temperierung der Räume verwendet wird.

Der Erfindung liegt somit die Aufgabe zugrunde, ein Verfahren der eingangs beschriebenen Art und die zugehörige Einrichtung so weiterzuentwickeln, daß eine Klimatisierung bei minimiertem Leistungsanschluß möglich ist. Es soll erreicht werden, daß von dem elektrische Energie liefernden Kraftwerk die Energie für eine Beheizung oder eine Kühlung losgelöst vom Heizbedarf oder Kühlbedarf dann bezogen werden kann, wenn sie vom Kraftwerk kostengünstig zur Verfügung gestellt wird. Gleichzeitig soll der Bedarf an solcher Energie minimiert werden.

Verfahrensmäßig wird diese Aufgabe, ausgehend von einem Verfahren der eingangs beschriebenen Art dadurch gelöst, daß zur Temperaturbeeinflussung Wärmemengen des Luftkreislaufs zwischengespeichert werden, indem sie in entsprechende Gebäudemassen über in die Gebäudemassen hineinverlegte Rohre für den Wasserkreislauf eingebracht oder aus diesen entnommen werden. Die Betonmassen eines Gebäudes sind z. B. ausgezeichnete Wärmespeicher (oder bei Bedarf eben auch Kältespeicher), die durch die in sie hinein verlegten Rohre des Wasserkreislaufs beheizt oder ausgekühlt werden können. Hierdurch können wegen der hohen Speicherkapazität des Betons für Wärme große Wärmemengen transportiert werden, ohne daß große Temperaturschwankungen an den Betonmassen auftreten. Damit können z. B. aus der Raumluft in die Betondecke und den Betonfußboden große Wärmemengen bei sehr kleinen Temperaturdifferenzen transportiert werden. Erhöht sich beispielsweise die Temperatur der Rauminnenluft um 0.5° so tritt ein Wärmetransport von der Rauminnenluft in die Betondecke und den Betonboden auf, der dort nur zu einer unmerklichen Temperaturerhöhung führt. Die großen Betonmassen nehmen also die Wärmemenge aus dem von ihnen begrenzten Raum auf. Die darin befindlichen Rohre können nun über entwärmtes Wasser kontinuierlich Tag und Nacht Wärmemenge abtransportieren, so daß beispielsweise während der Nachtstunden auch wieder problemlos mit kleinen Wassertransportleistungen eine Rückkühlung des entsprechenden Betonkörpers erreicht werden kann. Die entnommenen Wärmemengen können dann beispielsweise über eine Wärmepumpe auf ein höheres Temperaturniveau gebracht und in den Betonmassen des Gebäudekellers zwischengespeichert werden. Vielfach aber sind diese Betonmassen des Gebäudekellers ohnehin kühler, so daß die aus die Räume begrenzenden Betondeckenplatten und Betonfußbödenplatten über den Wasserkreislauf entnommene Wärme bei Durchführung durch die Betonmassen des Kellerraumes schon wegen des bestehenden natürlichen Temperaturgefälles an diese Betonmassen, ohne weiteres Zutun, abgegeben werden. In einer solchen Situation kann auf den Betrieb der Wärmepumpe verzichtet werden. Die in die Betonmassen der Kellerräume eingebrachte Wärmeinenge kann während der Nachtstunden, wenn das örtliche Energieversorgungsunternehmen (EVU) billigen Nachtstrom anbietet, bei Bedarf entwärmt werden. Mit dieser Wärmemenge kann dann entweder Brauchwasser aufgeheizt oder ein Schwimmbad beheizt oder es kann diese Wärmemenge auch ganz einfach an die Umgebungsluft des Gebäudes abgeführt werden. Der gesamte Wärmeaustausch geschieht erkennbar bei außerordentlich niedrigen Temperaturdifferenzen, so daß ggfls. zu betreibende Wärmepumpen mit einem außerordentlich günstigen Wirkungsgrad arbeiten können, wodurch der Leistungsanschlußbedarf wiederum gesenkt werden kann. Die verschiedenen Betonmassen dienen hierbei für Wärmeenergie als sehr große Speicher, aus denen über den Wasserkreislauf langsam Wärme entnommen oder in die über den Wasserkreislauf langsam Wärme eingebracht werden kann. Die zugehörige Raumtemperatur wird immer angenehm gehalten, weil trotz des Wärmetransportes die die Temperatur regulierenden Betondeckenplatten und Betonfußböden eine nur sehr geringe Temperaturschwankung aufweisen, so daß auch die Raumtemperatur nur entsprechend geringfügig schwankt. Auch dann, wenn z. B. aus einem solchen Raum durch das Öffnen eines großen Fensters während der Winterzeit rasch Wärme entweicht und die Raumtemperatur stark absinkt, kann doch nach dem Schließen des Fensters die verlorengegangene Wärme rasch von den genannten Betonmassen nachgeliefert werden, ohne daß diese in ihrer Temperatur nennenswert absinken. Die auf diese Art aus den Betonmassen entnommene Wärme kann über den Wasserkreislauf wieder langsam ersetzt werden und es wird dennoch die ursprüngliche Raumtemperatur trotz der geringen Leistung des Wasserkreislaufes rasch wieder hergestellt. Dies hat auch zur Folge, daß sowohl für eine Kühlung als auch für eine Beheizung im Luftkreislauf des Gebäudes nur geringe Veränderungen der Wärmemengen stattfinden. Es ist also bspw. für eine Kühlung nicht erforderlich, große Luftmengen mit sehr niedrigem Temperaturniveau zu transportieren und die entsprechend großen Luftmengen mit sehr leistungsfähigen Wärmepumpen zu entwärmen, wobei die Abfuhr der großen entnommenen Wärmemengen einen weiteren zusätzlichen Aufwand bedeuten würde, da diese entnommene große Wärmemenge ja rasch abtransportiert werden muß.

Ergänzend wird dann vorgeschlagen, daß die für eine Erwärmung oder Kühlung der Räume einzubringenden oder zu entnehmenden Wärmemengen innerhalb der Gebäudemasse gependelt werden. Dies bedeutet, daß soweit wie irgend möglich eine Wärmemenge, die in einem bestimmten Gebäudeteil z. Zt. nicht benötigt wird, dort entnommen und in den Massen eines anderen Gebäudeteils zwischengespeichert wird, bis bei den erstgenannten Gebäudeteilen wieder ein entsprechender Wärmebedarf besteht, so daß aus dein Zwischenspeicher nun die Wärmemenge in umgekehrter Richtung transportiert werden kann. Hierdurch kann sehr häufig auch in Zeiten, in denen ein hoher Kühlleistungsbedarf besteht, auf eine Wärmeabfuhr nach außen in die Umwelt verzichtet werden.

Nach einer weiteren Ausgestaltung wird vorgeschlagen, daß mindestens der aus dem Luftkreislauf entnommenen Gebäudefortluft eine Wärmemenge entzogen und dem Wasserkreislauf zugeführt wird. Hierdurch wird ein Wärmeverlust aus der Fortluft vermieden und es wird die entsprechende rückgewonnene Wärme dem Wasserkreislauf zugeführt, der sie je nach Schaltung an den gewünschten Ort transportieren kann. Natürlich kann aber auch mit der aus der Fortluft rückgewonnenen Wärme, falls erforderlich, Frischluft erwärmt werden.

Weiter ist noch vorgeschlagen, daß bei Kühlbetrieb die den zu kühlenden Innenräumen entnommene Wärmemenge in Kellerbaumassen des Gebäudes zwischengespeichert und von dort zur Deckung eines Wärmebedarfes bei anderen Gebäuden oder Einrichtungen entnommen oder kontinuierlich an die Außenluft abgeführt wird. Bei einem sehr hohen Kühlleistungsbedarf können Wärmemengen entstehen, die in dem Gebäude, in dem Kühlleistungsbedarf angefallen ist, nicht weiter verwendet werden können, weil aller Leistungsbedarf beispielsweise für die Brauchwasseraufheizung oder eine Schwimmbadbeheizung bereits gedeckt ist und eine Zwischenspeicherung in z. B. den Kellerbaumassen über längere Zeit hinweg dort zu unerwünscht hoher Erwärmung führen würde. Diese "Überschußwärmemenge" kann kontinuierlich entnommen und zur Deckung des Wärmebedarfs an anderen Gebäuden oder Einrichtungen verwendet werden. Solche anderen Einrichtungen können z. B. Treibhäuser sein. Es ist aber auch denkbar, daß andere in der Nachbarschaft stehende Gebäude, wie z. B. Wohnhäuser, in bestimmten Bereichen oder zur Brauchwassererwärmung einen Wärmebedarf haben, der aus der hier angesprochenen Überschußwärme leichter gedeckt werden kann als durch entsprechende Entwärmung von Baumassen des eigenen Baukörpers. Ein solcher Wärmeaustausch von Überschußwärme kann besonders vorteilhaft sein bei einer größeren Anzahl nahe beieinander stehender, unterschiedlicher Gebäude mit unterschiedlichem Wärmebedarf, wodurch der Gesamtleistungsbedarf für eine solche "Gebäudesammlung", die das EVU zur Verfügung stellen muß, weiter sinkt und es wird hierdurch möglich, sowohl im einzelnen Gebäude als auch in der gesamten Ansammlung der Gebäude starke tageszeitlich untschiedliche Lastschwankungen zu vermeiden. Da aber auch schon das erfindungsgem. Verfahren in der Anwendung auf ein einzelnes Gebäude starke Lastschwankungen vermeidet, wird eine größer werdende Anzahl von Gebäuden, die nach diesem Verfahren klimatisiert werden, dazu beitragen, die täglichen Lastschwankungen für das jeweils zuständige EVU immer mehr zu mindern.
Entsteht trotz aller Verteilmöglichkeiten Überschußwärme, so kann diese aus der Zwischenspeicherung in den Kellerbaumassen der Gebäude kontinuierlich an die Außenluft abgeführt werden. Wegen der Zwischenspeicherung kann diese kontinuierliche Abführung langsam und z. B. vorzugsweise während der Nachtstunden erfolgen, so daß auch hier eine hohe Entwärmeleistung für die Abführung der Wärme an die Umgebungsluft vermieden werden kann.

Es wird weiter noch vorgeschlagen, daß mindestens ein Teil der Gebäudemassen, die nicht der Begrenzung der in ihrer Temperatur zu regelnden Innenräume dienen, je nach Wärmebedarf zu Zeiten eines günstigen Stromtarifs entwärmt oder gewärmt werden, wobei zur Temperaturregelung hieraus Wärme entnommen oder hierzu Wärme eingebracht wird. Dies bedeutet, daß z. B. die Kellermassen eines Gebäudes als Zwischenspeicher für eine gewünschte Wärmemenge dienen, wobei die Wärmesituation dieses Zwischenspeichers ganz nach Bedarf und zu gewünschten günstigen Zeiten beeinflußt werden kann. Dieser Wärmespeicher steht dann in seinem jeweils gewünschten Wärmezustand zur bedarfsweisen Wärmeentnahme oder Wärmeauffüllung zur Verfügung, so daß die Klimatisierung z. B. der Wohnräume einerseits und der hierfür erforderliche Leistungsbezug vom EVU entkoppelt sind, so daß nicht nur innerhalb des Gebäudes mit günstigen Verhältnissen gearbeitet werden kann, sondern auch, jedenfalls der Hauptteil des erforderlichen Leistungsbedarf zu Tageszeiten günstiger Stromtarife gedeckt werden kann.

Eine Einrichtung zur Durchführung des erfindungsgem. Verfahrens ist gekennzeichnet durch mindestens einen Wasserkreislauf, dessen Rohre in den Betonmassen eines Gebäudes verlegt sind und mit mindestens einer Wasser-Wasser-Wärmepumpe und mindestens einem im Luftkreislauf des Gebäudes, der durch Zwischenraum zwischen den Außenwänden und einer weiteren Hülle geführt ist, liegenden Luft-Wasser-Wärmetauscher zusammenwirken. Mit Hilfe der in den Betonmassen des Gebäudes verlegten wasserdurchströmten Rohre und der genannten Wärmepumpe können Wärmemengen mindestens in den Betonmassen in gewünschter Weise verschoben werden, so daß entsprechende Bereiche des Gebäudes gewärmt und andere Bereiche des Gebäudes dafür gekühlt werden. Über den Luft-Wasser-Wärmetauscher kann der Gebäude Luftwärme entnommen oder zugeführt werden und entnommene Wärme in den Wasserkreislauf und zuführende Wärme in den Luftkreislauf eingebracht werden. Die jeweiligen Kreisläufe müssen selbstverständlich die entsprechenden Steuerventile, die für die Kreislaufführung notwendig sind, enthalten.

Weiterhin ist vorgesehen, daß der Luftkreislauf des Gebäudes eine Frischluftführung und eine Fortluftführung aufweist, wobei mindestens der Fortluftführung oder der Frischluftführung ein von der Fortluft bzw. Frischluft durchströmter und im Wasserkreislauf liegender Luft-Wasser-Wärmetauscher zugeordnet ist. Hierdurch kann gezielt die Fortluft aber auch die Frischluft oder beides durch Wärmeentnahme oder Wärmezuführung beeinflußt werden.

Ergänzend ist noch vorgeschlagen, daß der Luft-Wasser-Wärmetauscher aus einer Vielzahl von koaxial übereinander angeordneten, je als Rohrspiralpaket ausgebildeten Leitungen je mit einem Eingang und einem Ausgang besteht, wobei alle Rohre in einem Abstand zueinander angeordnet sind, durch den die Luft des Luftkreislaufes fließen kann und deren Eingang und Ausgang je in einem Verteiler zusammengeführt und mit dem Wasserkreislauf verbunden sind. Hierdurch entsteht auf kleinstem Raum eine sehr große Rohroberfläche, so daß ein Wärmetransport von der die Rohroberflächen umstreichenden Luft zum die Rohr durchfließenden Wasser und umgekehrt schon bei niedrigsten Temperaturdifferenzen zwischen beiden Medien erfolgt, so daß auch hier wieder nur sehr kleine Temperaturdifferenzen für den gewünschten Wärmetransport erforderlich sind. Es ist hierbei sinnvoll, jeweils im sog. Gegenstrom zu arbeiten. Dies bedeutet, daß dann, wenn im Luft-Wasser-Wärmetauscher das Wasser von innen nach außen fließt, die den Wärmetauscher durchströmende Luft von außen nach innen strömen muß, um eine möglichst günstige Wärmeübertragung zu erreichen.
Die Aufteilung in einzelne Leitungsgruppen, die jeweils am Anfang und am Ende über einen Verteiler zusammengefaßt werden, sorgt dafür, daß trotz der kleinen Rohrquerschnitte relativ große Wassermengen einfach und mit geringem Widerstand transportiert werden können.

Schließlich ist noch vorgeschlagen, daß Absorber von Sonnenkollektoren in den Wasserkreislauf und/oder den Luftkreislauf eingebunden sind. In Zeiten großen Wärmebedarfes können diese ebenfalls Wärme sammeln und dem Wasserkreislauf oder dem Luftkreislauf zuführen. Hierbei kann die entsprechende Wärmemenge beispielsweise bei Bedarf aus dem Luftkreislauf entnommen und dem Wasserkreislauf zugeführt werden.

Die Erfindung soll nun anhand der beigefügten Zeichnungen näher erläutert werden.

Es zeigen:
- Figur 1: Prinzipfließbild zur Verdeutlichung der Verknüpfungen der einzelnen Elemente untereinander
- Figur 2: Luft-Wasser-Wärmetauscher mit umgebenden Gehäuse
- Figur 3: Schnitt A - A nach Fig. 2
- Figur 4: Schaltbild einer erfindungem. Einrichtung

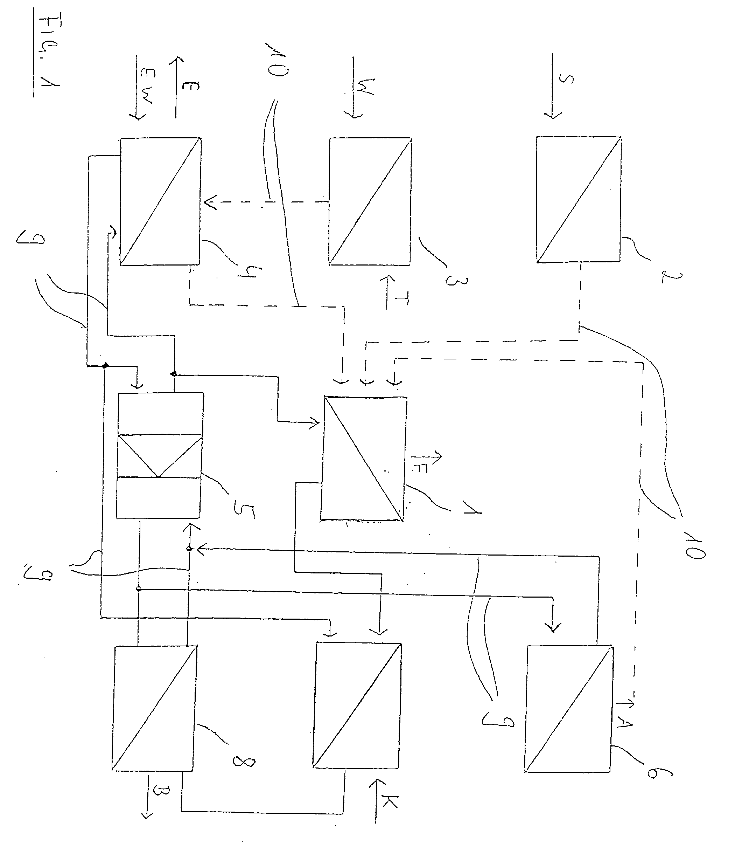

Das Fließbild nach Fig. 1 ist ein Beispiel, daß die einzelnen Baukomponenten und die zwischen den Baukomponenten fließenden Wärmeströme verdeutlicht. Besonders wichtig ist hierin der Luft-Wasser-Wärmetauscher 1. Eine nach diesem Fließbild arbeitende Anlage kann in einer Vielzahl von Bauwerken, wie Wohnhäuser oder auch Geschäftsgebäude, installiert sein. Die Luft in dem Luftkreislauf 10 kann, wie in Fig. 1 angedeutet, sowohl Sonnenkollektoren 2 als auch die Außenwände 3 des Gebäudes und z. B. die Baumasse des Kellers 4 durchströmen und die dabei aufgenommene Sonnenenergie S, die Wärme der Außenluft W und die Energie der Erdwärme EW dem Luft-Wasser-Wärmetauscher 1 zuführen. Zusätzlich kann die stets erwärmte Abluft A der Innenräume 6 dem Luftkreislauf 10 zugeführt werden, so daß die hierin enthaltene Wärme wieder rückgewonnen werden kann. Wenn die Außenwände 3 von einer weiteren Hülle umgeben sind, wie dies aus der eingangs genannten europ. Patentschrift mit der Veröffentlichungsnr. 0 236 704 B1 bekannt ist, kann auch die Transmissionswärme aus dem Gebäudeinnern dem Luftkreislauf 10 wieder zugeführt und damit rückgewonnen werden. In den Betonmassen des Bauwerkes sind die Rohrleitungen des Wasserkreislaufs 9 verlegt, so daß das Wasser Wärme zwischen unterschiedlichen Betonmassen hin- und hertransportieren kann. Zusätzlich ist es aber auch möglich, die Rohre des Wasserkreislaufs in dem das Gebäude umgebenden Erdreich zu versenken, so daß aus diesem Erdreich bei Bedarf Wärme entnommen oder darin Wärme gespeichert werden kann.

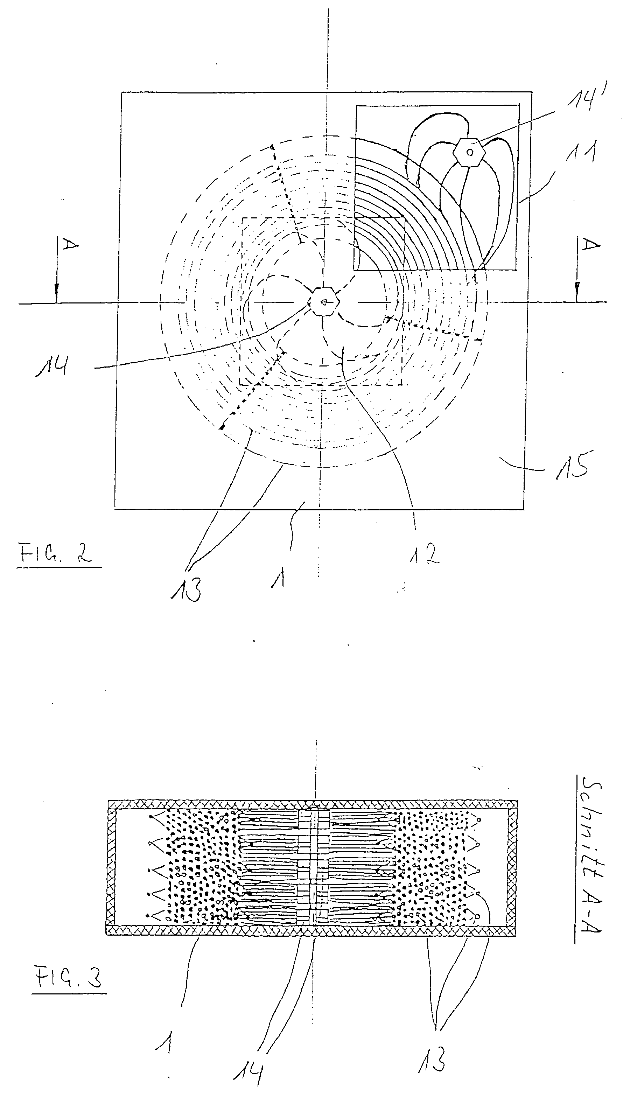

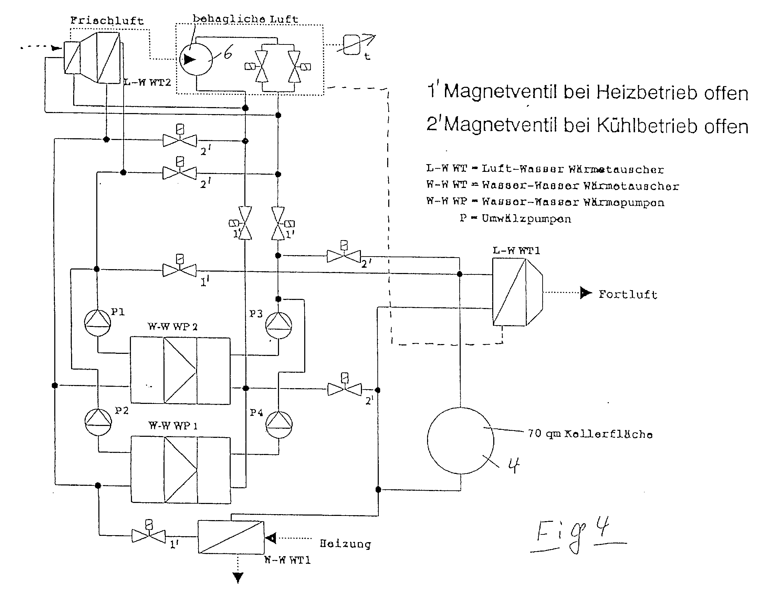

Aus dem Luftkreislauf 10 kann Wärme möglichst direkt und mit geringem Energieaufwand in den Wasserkreislauf 9 übertragen werden, indem die den zu entnehmenden Wärmeinhalt aufweisende Luft über ein nicht näher dargestelltes Gebläse durch den Luft-Wasser-Wärmetauscher 1 geblasen wird, der, wie in den Fig. 2 und 3 dargestellt, aus mehreren unabhängigen Kreisläufen besteht, die von spiralförmig gewickelten Rohrleitungen gebildet werden. Es kann sich hierbei z. B. um ein Kunststoffrohr handeln, das je Einheit zu einem spiralförmigen Paket mit einem Einlauf und einem Auslauf ausgebildet ist, wobei mehrere dieser spiralförmigen Pakete koaxial übereinander angeordnet sind. Die Rohre werden z. B. durch dazwischengelegte Drähte auf Abstand zueinander gehalten, so daß Luft durch die Zwischenräume hindurchgeblasen werden kann. Die Rohre sind hierbei vom Wasser des Wasserkreislaufs 9 durchströmt und bilden auf engstem Raum eine sehr große Oberfläche. Werden die Zwischenräume nun von Luft durchströmt, so kann selbst bei kleinsten Temperaturdifferenzen zwischen Luft und Wasser des Wasserkreislaufs sehr gut Wärme in Richtung des Mediums mit der niedrigeren Temperatur transportiert werden. Um eine möglichst gute Wirkung des Luft-Wasser-Wärmetauschers zu erzielen, muß dieser im Gegenstrom arbeiten. Dies bedeutet, daß dann, wenn am Luft-Wasser-Wärmetauscher 1 Wasser vom Zentrum her nach außen gepumpt wird, die Luft von außen nach innen strömen muß, um eine möglichst große Wärmemenge zu transportieren. Die Aufteilung in einzelne unabhängige Kreisläufe innerhalb des Luft-Wasser-Wärmetauschers 1 ergibt einen geringeren Widerstand für den Wassertransport und erlaubt damit den Transport größerer Wassermengen bei kleinerer Pumpleistung. Die Enden des jeweiligen Kreislaufs innerhalb des Luft-Wasser-Wärmetauschers 1 sind zusammengefaßt in Verteilerstücken 14 und 14'. Während des Betriebes wird der Innenraum 15 des Luft-Wasser-Wärmetauschers 1 möglichst frei von der Luft des Luftkreislaufs 10 in der beschriebenen Gegenstromrichtung durchströmt, so daß die gesamte Rohroberfläche der Rohrleitungen 13 mit der Luft des Luftkreislaufs 10 in Kontakt kommt und so ein Wärmeübergang in gewünschter Richtung erfolgt. Soll z. B. in den Luft-Wasser-Wärmetauscher 1 Luft aus dein Luftkreislauf 10 entwärmt werden, so wird diese Luft in den Lufteinlaß 11 geblasen, der in seinem Querschnitt vorzugsweise etwas größer ist als der Luftauslaß 12 des Luft-Wasser-Wärmetauschers 1. Hierdurch entsteht im Luft-Wasser-Wärmetauscher 1 ein Luftstau, wodurch sich die Temperatur der im Innenraum 15 des Luft-Wasser-Wärmetauschers 1 befindlichen Luft noch einmal leicht erhöht. Da nun die Luft, wie bereits beschrieben, an der Oberfläche der spiralförmig gewickelten Rohrleitung 13 radial von außen nach innen aber auch axial vorbeistreicht, kann von diesen Rohrleitungen 13 die Wärme aus der Luft aufgenommen und an das sie durchströmende Wasser abgegeben werden. Hierfür ist natürlich Voraussetzung, daß dieses Wasser eine geringere Temperatur aufweist, als die Luft. Dies kann z. B. dadurch erreicht werden, daß dieses Wasser aus Baumassen, deren Temperatur unterhalb der Lufttemperatur liegen, durch den Luft-Wasser-Wärmetauscher 1 gepumpt wird. Eine entsprechende Konstellation liegt z. B. vor, wenn die zu entwärmende Luft aus Wohnräumen mit 22°C entnommen worden ist, während das Wasser des Wasserkreislaufs 9 aus den Betonmassen des Gebäudekellers, die z. B. eine Temperatur von 18°C haben können, durch den Luft-Wasser-Wärmetauscher 1 gepumpt wird. Dieses Wasser muß dann die Temperatur der Betonmassen der Kellerräume haben. Es kann dieses Wasser natürlich auch vorher in einer Wärmepumpe 5 abgekühlt worden sein und sodann dem Luft-Wasser-Wärmetauscher 1 zugeleitet worden sein. In einem solchen Fall kann die von der Wärmepumpe gewonnene Wärme bei höherer Temperatur beispielsweise für die Aufheizung von Brauchwasser K verwendet werden. Um dies möglichst effektiv zu gestalten, kann das von der Wärmepumpe 5 entwärmte und durch den Luft-Wasser-Wärmetauscher geführte Wasser die im Luft-Wasser-Wärmetauscher 1 aufgenommene Wärme zunächst an das kalte Brauchwasser K abgeben und dieses damit vorwärmen. Der Energieaufwand, der nun für die Erwärmung des bereits vorgewärmten kalten Brauchwassers aufgewendet wird, ist somit wesentlich geringer als die Energie die von der Wärmepumpe für die Aufheizung des kalten Brauchwassers hätte aufgewandt werden müssen. Der Wärmepumpe 5 ist relativ warmes Wasser aus dein Wasserkreislauf der Gebäudemassen angeboten worden, so daß die Wärmepumpe mit einem sehr guten Wirkungsgrad die diesem relativ warmen Wasser entnommene Wärmemenge auf eine höhere Temperatur bringen kann. Das solcherart abgekühlte Wasser ist nun besonders effektiv im Luft-Wasser-Wärmetauscher 1, so daß in diesem Wärmetauscher wegen des nun bestehenden relativ großen Temperaturgefälles zwischen Wasser und Luft wieder rasch große Wärmemengen aus der Luft in den Wasserkreislauf transportiert werden. Diese Wärmemenge, die zum Vorwärmen des kalten Brauchwassers genutzt werden kann, ist ohne irgendeinen gesonderten Energieaufwand aus dem Luftkreislauf gewonnen und kann an das kalte Brauchwasser abgegeben werden, so daß eine entsprechende Leistung einer Wärmepumpe eingespart werden kann.

Das kalte Brauchwasser K wird also nach einer Vorwärmung und der Nachheizung durch die Wärmepumpe zu heißem Brauchwasser B aufbereitet. Dieses Brauchwasser B kann dann z. B. in einem Behälter gespeichert und damit als Warmwasserspeicher 8 genutzt werden oder aber auch zur Beheizung der Baumasse der Innenräume 6 verwendet werden. Es können aber auch die von dem Wasserkreislauf 9 durchströmten Gebäudemassen, wie z. B. die Baumasse des Kellers 4 und/oder die Baumasse der Innenräume 6 als Energiespeicher genutzt werden. Der Wasserkreislauf 9 kann somit seine Wärme entweder sofort an den Kältemittelkreislauf der Wärmepumpe 5 abgeben oder aber in den Gebäudemassen zwischenspeichern. Als Zwischenspeicher kann auch das umgebende Erdreich E dienen.

Von entscheidender Bedeutung für die Erfindung ist die Erkenntnis, daß die Betonmassen des Gebäudes große Wärmemengen aufnehmen und abgeben können, bei nur geringen Temperaturschwankungen. Da ein gut isoliertes Gebäude nur wenig Wärme verliert, genügt es zur Temperaturregelung von beispielsweise Wohnräumen in solchen Gebäuden, wenn nur geringe Wärmemengen transportiert werden. Liegt also die Temperatur von solche Wohnräume begrenzenden Betonmassen, wie Decken und Fußböden, geringfügig oberhalb der gewünschten Raumtemperatur, so muß nur der sehr geringe Wärmeverlust über diese Betonmassen nachgeliefert werden. Diese geringen Wärmemengen können sehr einfach über den Wasserkreislauf der in diesen Betonmassen verlegten Rohre bei entsprechend niedriger Temperatur des Wassers des Wasserkreislaufs nachgeliefert werden. Es ist somit eine nur sehr geringe Heizleistung und nur eine geringe Pumpleistung erforderlich. Bei einem kurzfristigen plötzlichen Wärmeverlust beispielsweise durch Öffnen eines Fensters, muß zur Wiederherstellung der Raumtemperatur kurzfristig eine große Wärmemenge fließen. Diese kurzfristig benötigte große Wärmemenge wird mühelos von den erwärmten Betonmassen abgegeben , ohne daß sich deren Temperatur hierbei nennenswert verringert. Auch nach Wiederherstellung der gewünschten Raumtemperatur kann diese in Folge der immer noch entsprechend hohen Temperatur der angrenzenden Betoninassen aufrechterhalten werden. Gleichzeitig kann die den Betonmassen entnommene Wärmemenge über einen langen Zeitraum wieder aufgefüllt werden, so daß auch jetzt nur, wenn auch über einen längeren Zeitraum, kleine Wärmemengen transportiert werden müssen und damit nach wie vor nur geringe Anforderungen an eine Wärmepumpe gestellt werden. Die Wärmepumpe kann entsprechend klein ausgelegt sein und muß nur eine sehr geringe Temperaturdifferenz erzeugen, so daß sie zudem mit einem sehr guten Wirkungsgrad arbeiten kann. Der notwendige Anschlußwert sinkt damit und es kann gleichzeitig dafür gesorgt werden, daß ein gleichmäßiger Energiebezug erfolgt und nicht sehr starke Lastschwankungen entstehen. Sowohl der Luftkreislauf als auch der Wasserkreislauf arbeitet für einen Wärmetransport mit nur sehr geringen Temperaturdifferenzen. Der Anschlußwert für einen Ventilator, der die Luft durch den Luft-Wasser-Wärmetauscher 1 pumpen kann, ist sehr gering. Solche Luft-Wasser-Wärmetauscher können jeweils sowohl auf der Saugseite als auch auf der Druckseite des Ventilators angeordnet sein, wobei die zugehörigen Wasserkreisläufe unterschiedliche Temperatur aufweisen können, so daß dem Luftkreislauf bei unterschiedlicher Temperaturhöhe Wärme entnommen werden kann, wobei hierzu lediglich die Anschlußleistung des Ventilators erforderlich ist. Ermöglicht wird dies durch die erfindungsgem. Bauart des Luft-Wasser-Wärmetauscher 1.

In Fig. 4 ist eine konkrete Anlagenverschaltung gezeigt, wie sie in einem Bürogebäude ausgeführt sein könnte. Mit einer solchen Anlage kann sowohl gekühlt als auch geheizt werden. Anordnung und Wirkungsweise der einzelnen Elemente soll daher nachfolgend beschrieben werden.

### Kühlbetrieb

Beim Kühlbetrieb sind die Magnetventile 2' geöffnet und die Magnetventile 1' geschlossen.

### Verdampferseite der Wärmepumpen:

Auf der Verdampferseite der Wärmepumpe W-W WP1 pumpt die Umwälzpumpe P2 kaltes Wasser in die zu kühlenden Räume, sowie in die Druckseite und die Saugseite des L-W WT2.

In den zu kühlenden Räumen nimmt das kalte Wasser in den Rohrschlangen überschüssige Wärme aus den Räumen auf und wird dem Rücklauf zu den Wärmepumpen zugeführt.

Im L-W WT 2 wird durch das kalte Wasser in der Druck- und Saugseite die angesogene warme Frischluft gekühlt. Dabei nimmt das kalte Wasser die überschüssige Wärme aus der Frischluft, welche in die Büroräume geblasen wird, auf und wird ebenfalls dem Rücklauf zu den Wärmepumpen zugeführt.

### Kondensatorseite der Wärmepumpen:

Auf der Kondensatorseite der Wärmepumpe W-W WP1 pumpt die Umwälzpumpe P4 das durch die Wärmepumpen erzeugte warme Wasser in den L-W WT1 und in die Rohrschlangen der 70qm Kellerfläche.

Im L-W WT1 wird durch das warme Wasser die abgesogene Abluft aus den Büroräumen erwärmt und nach draußen geblasen.
Das dadurch abgekühlte Wasser wird dem Rücklauf zu den Wärmepumpen zugeführt.

Im Kellerraum gibt das warme Wasser seine Wärme an das Erdreich und an die Baumassen ab.
Das abgekühlte Wasser wird ebenfalls dem Rücklauf zu den Wärmepumpen zugeführt.

Falls die Wärmepumpe W-W WP1 nicht genügend Kühlleistung bringt, schaltet sich die Wärmepumpe W-W WP2 hinzu.
An den einzelnen Abläufen ändert sich jedoch nichts, da die beiden Wärmepumpen parallel betrieben werden.

### Heizbetrieb

Während des Heizbetriebs sind die Magnetventile 1' geöffnet und die Magnetventile 2' geschlossen.

### Verdampferseite der Wärmepumpen:

Auf der Verdampferseite der Wärmepumpe W-W WP1 pumpt die Umwälzpumpe P 2 kaltes Wasser in die Saugseite des L-W WT2, in den L-W WT1, sowie in die Rohrleitung der 70 qm Kellerfläche.

In der Saugseite des L-W WT2 wird dadurch angesaugte Frischluft kondensiert und somit von Feuchtigkeit, Staubpartikeln und Aerosolen gereinigt. Das kalte Wasser nimmt die dabei entstehende Kondensationswärme auf und wird dem Rücklauf der Wärmepumpen wieder zugeführt.

Im L-W WT1 nimmt das kalte Wasser Wärme aus der angesaugten Abluft der Büroräume auf und wird ebenfalls dem Rücklauf zu den Wärmepumpen zugeführt.

In den Rohrleitungen im Keller nimmt das kalte Wasser Wärme aus dem Raum und dem Erdreich auf und wird auch hier dem Rücklauf zu den Wärmepumpen zugeführt.

Die Rückläufe aus dem L-W WT1 und dem Kellerraum können im W-W WP1 durch Wärmegewinnung aus der koventionellen Heizung des Gebäudes auf ausreichende Verdampfungstemperaturen für das Verdampfungsmedium der Wärmepumpen gebracht werden, falls die Wärme aus der Abluft und dem Keller nicht ausreicht.

### Kondensatorseite der Wärmepumpen:

Auf der Kondensatorseite der Wärmepumpen W-W WP1 pumpt die Umwälzpumpe P4 warmes Wasser in die zu heizenden Räume, sowie in die Druckseite des L-W WT2.

In den zu heizenden Räumen nimmt der Boden und die Deck die Wärme aus dem warmen Wasser in den Rohrschlangen auf und gibt die Wärme als behagliche Strahlungswärme an die Räume ab.

Das abgekühlte Wasser wird dem Rücklauf zur Wärmepumpe zugeführt. In der Druckseite des L-W WT2 wird durch das warme Wasser die zuvor auf der Saugseite angesogene und gereinigte Frischluft erwärmt und in die zu heizenden Räume geblasen.
Das abgekühlte Wasser wird ebenfalls dem Rücklauf zur Wärmepumpe zugeführt.

Falls die Wärmepumpe W-W WP1 in Spitzenzeiten nicht genügend Leistung bringt, schaltet sich die Wärmepumoe W-W WP2 hinzu.
An den einzelnen Abläufen ändert sich jedoch nichts, da die beiden Wärmepumpen parallel betrieben werden.

Die bei einer Anlage nach Fig. 4 noch vorgesehene konventionelle Heizung im Bereich des W-W WT1 ist als absolute Ausnahme anzusehen für den Fall, daß eine solche erfindungs. Einrichtung nachträglich installiert wird bei Altbauten mit sehr schlechter Wärmeisolierung. Solche Altbauten weisen ja stets eine konventionelle Heizung auf, die dann in die erfinungsgem. Einrichtung integriert werden kann und falls notwendig, zusätzliche Wärme nachliefern kann. In der Regel ist dies jedoch nicht erforderlich.

Mit dem erfindungsgemäßen Verfahren und der erfindungsgemäßen Einrichtung gelingt es, alle zur Verfügung stehenden natürlichen Wärmequellen, wie z.B. Sonnenwärme, Körperwärme, Erdwärme, Luftwärme auszunützen und entsprechende Wärmemengen in den Betonmassen des Gebäudes, die große Wärmemengen aufnehmen können, zwischenzuspeichern. Diese Wärmemengen können dann bei Bedarf und bei nur geringer Temperaturdifferenz über die Wasserkreisläufe und die Luftkreisläufe innerhalb der Betonmassen beliebig hinund hergeschoben werden, so daß z.B. die Wohnräume sehr gut klimatisiert werden können. Für den Wärmetransport ist nur eine außerordentlich geringe Anschlußleistung erforderlich, die außerdem bei nur geringsten Lastschwankungen gleichmäßig von EVU abgenommen werden kann. Eine Leistungsabnahme kann während der Zeit abgenommen werden, in der günstige Tarife bestehen. Wird eine größere Anzahl von Gebäuden in der erfindungsgemäßen Weise ausgerüstet, so wird hierdurch gleichzeitig dafür gesorgt, daß sich die Lastspitzen des zugehörigen EVU's verringern und somit ein solches Kraftwerk günstiger betrieben werden kann.

## Patentansprüche

1. Verfahren zur Temperaturregelung von Räumen in Gebäuden mit einem Luftkreislauf der durch den Zwischenraum zwischen den Außenwänden und einer weiteren Hülle geführt ist und mit Wasserkreisläufen mindestens zu Heizzwecken, dadurch gekennzeichnet, daß zur Temperaturbeeinflussung Wärmemengen des Luftkreislaufs zwischengespeichert werden, indem sie in entsprechende Gebäudemassen über in die Gebäudemassen hineinverlegte Rohre für den Wasserkreislauf (9) eingebracht oder aus diesen entnommen werden.

2. Verfahren nach Anspruch 1, dadurch gekennzeichnet, daß die für eine Erwärmung oder Kühlung einzubringenden oder zu entnehmenden Wärmemengen innerhalb der Gebäudemassen gependelt werden.

3. Verfahren nach einem der Ansprüche 1 oder 2, dadurch gekennzeichnet, daß mindestens der aus dem Luftkreislauf (10) entnommenen Gebäudefortluft eine Wärmemenge entzogen und dem Wasserkreislauf (9) zugeführt wird.

4. Verfahren nach einem der Ansprüche 1 bis 3, dadurch gekennzeichnet, daß bei Kühlbetrieb die den zu kühlenden Innenräumen (6) entnommene Wärmemenge in Kellerbaumassen des Gebäudes zwischengespeichert und von dort zur Deckung des Wärmebedarf bei anderen Gebäuden oder Einrichtungen entnommen oder kontinuierlich an die Außenluft abgeführt wird.

5. Verfahren mindestens nach Anspruch 1, dadurch kennzeichnet, daß mindestens ein Teil der Gebäudemassen, die nicht der Begrenzung der in ihrer Temperatur zu regelnden Innenräume (6) dienen, je nach Wärmebedarf zu Zeiten eines günstigen Stromtarifs entwärmt oder gewärmt werden, wobei zur Temperaturregelung hieraus Wärme entnommen oder hierzu Wärme eingebracht wird.

6. Einrichtung zur Durchführung des Verfahrens nach einem der Ansprüche 1 bis 5, gekennzeichnet durch mindestens einen Wasserkreislauf (9), dessen Rohre in den Gebäudemassen eines Gebäudes verlegt sind und mit mindestens einer Wasser-Wasser-Wärmepumpe (5, W-W WP 1/2) und mindestens einem im Luftkreislauf (10) des Gebäudes, der durch den Zwischenraum zwischen den Außenwänden und einer weiteren Hülle geführt ist, liegenden Luft-Wasser-Wärmetauscher (1, L-W WT 1/2) zusammenwirken.

7. Einrichtung nach Anspruch 6, dadurch gekennzeichnet, daß der Luftkreislauf (10) des Gebäudes eine Frischluftführung und eine Fortluftführung aufweist, wobei mindestens der Fortluftführung oder der Frischluftführung ein von der Fortluft- bzw. Frischluft durchströmter und im Wasserkreislauf (9) liegender Luft-Wasser-Wärmetauscher (1, L-W WT 1/2) zugeordnet ist.

8. Einrichtung nach Anspruch 7, dadurch gekennzeichnet, daß der Luft-Wasser-Wärmetauscher (1, L-W WT 1/2) aus einer Vielzahl von koaxial übereinander angeordneten, je als Rohrspiralpaket ausgebildeten Rohrleitungen (13) je mit einem Eingang und mit einem Ausgang besteht, wobei alle Rohre (13) in einem Abstand zueinander angeordnet sind, durch den die Luft des Luftkreislaufes (10) fließen kann und deren Eingang und Ausgang je in einem Verteiler (14,14') zusammengeführt und mit dem Wasserkreislauf (9) verbunden sind.

9. Einrichtung nach mindestens einem der Ansprüche 6 bis 8, dadurch gekennzeichnet, daß Absorber von Sonnenkollektoren (2) in den Wasserkreisläufen (9) und/oder den Luftkreisläufen (10) eingebunden sind.

## Claims

1. A method for controlling the temperature of rooms in buildings, comprising an air circuit conducted through the intermediate space between the exterior walls and a further cover and comprising water circuits at least for heating purposes, characterised in that for temperature control, quantities of heat from the air circuit are temporarily stored by feeding them into respective building structures by way of pipelines for the water circuit (9) installed inside the building structures, or by withdrawing them from the said building structures.

2. A method according to claim 1, characterised in that quantities of heat to be fed in or withdrawn for cooling or heating are moved to-and-fro within the building structures.

3. A method according to one of claim 1 or 2, characterised in that a quantity of heat is withdrawn from at least the building exhaust air taken from the air circuit (10) and supplied to the water circuit (9).

4. A method according to one of claims 1 to 3, characterised in that during cooling operations the quantity of heat taken from the interior rooms (6) to be cooled is temporarily stored in the cellar structures of the building from where it is withdrawn to cover the heat requirement of other buildings or installations or from where it is continuously conveyed to the outside ambient air.

5. A method at least according to claim 1, characterised in that at least part of the building structures which are not used to delimit the interior rooms (6) in which the temperature is to be controlled, are heated or cooled, depending on the temperature requirements, at times when the electricity rate is favourable, with temperature control taking place by feeding heat to, or withdrawing heat from the said part of the building structures.

6. A device for implementing the method according to one of claims 1 to 5, characterised by at least one water circuit (9) whose pipelines are routed in the building structures of a building acting in unison with at least one water-water heat pump (5, W-W HP 1/2) and at least one air-water heat exchanger (1, A-W HE 1/2) situated in the air circuit (10) of the building, with the water circuit (9) being ducted through the intermediate space between the exterior walls and a further cover.

7. A device according to claim 6, characterised in that the air circuit (10) of the building comprises fresh air ducting and exhaust air ducting, with an air-water heat exchanger (1, A-W HE 1/2) which is situated in the water circuit (9) and through which exhaust air or fresh air flows, being allocated at least to the exhaust air ducting or the fresh-air ducting.

8. A device according to claim 7, characterised in that the air-water heat exchanger (1, A-W HE 1/2) comprises a plural number of pipelines (13), each configured as a helical pipe arrangement coaxially arranged one above the other arrangement and each comprising an inlet and an outlet, with all pipes (13) arranged spaced apart from each other, through which space the air of the air circuit (10) is able to flow, with the inlet and outlet each being connected to a distributor (14, 14') through which they are in communication with the water circuit (9).

9. A device according to at least one of claims 6 to 8, characterised in that absorbers from solar collectors (2) are integrated into the water circuits (9) and/or the air circuits (10).

## Revendications

1. Procédé pour réguler la température de locaux dans des bâtiments avec un circuit d'air qui est guidé par l'espace intermédiaire entre les parois extérieures et une autre gaine et avec des circuits d'eau au moins pour le chauffage, caractérisé en ce que, pour influer sur la température, on stocke provisoirement des quantités de chaleur du circuit d'air en les introduisant dans des masses de bâtiments appropriées par des tuyaux posés à l'intérieur des masses de bâtiment et destinés au circuit d'eau (9), ou en les enlevant de ces masses.

2. Procédé selon la revendication 1, caractérisé en ce que les quantités de chaleur à introduire pour un réchauffement ou un refroidissement ou les quantités de chaleur à enlever font la navette à l'intérieur des masses de bâtiment.

3. Procédé selon l'une quelconque des revendications 1 ou 2, caractérisé en ce qu'une quantité de chaleur est enlevée au moins de l'air d'échappement du bâtiment prélevé sur le circuit d'air (10) et est amenée au circuit d'eau (9).

4. Procédé selon l'une quelconque des revendications 1 à 3, caractérisé en ce que, en mode refroidissement, la quantité de chaleur prélevée dans les locaux intérieurs (10) à refroidir est stockée provisoirement dans des masses de sous-sol du bâtiment et de là est prélevée pour couvrir les besoins en chaleur sur d'autres bâtiments ou équipements ou bien est évacuée de façon continue vers l'air extérieur.

5. Procédé au moins selon la revendication 1, caractérisé en ce qu'au moins une partie des masses de bâtiment, qui ne servent pas à délimiter les locaux intérieurs (6) à réguler en température, est refroidie ou réchauffée en fonction des besoins de chaleur aux heures de tarification favorable pour l'électricité, de la chaleur pouvant être prélevée ou introduite pour le réglage de la température

6. Dispositif pour l'application du procédé selon l'une quelconque des revendications 1 à 5, caractérisé par au moins un circuit d'eau (9), dont les tuyaux sont posés dans les masses d'un bâtiment et agissent conjointement avec au moins une pompe thermique eaueau (5, W-W WP 1/2) et au moins un échangeur de chaleur air-eau (1, L-W WT 1/2) qui est disposé dans le circuit d'air (10) du bâtiment, lui-même guidé par l'espace intermédiaire entre les parois extérieures et une autre gaine.

7. Dispositif selon la revendication 6, caractérisé en ce que le circuit d'air (10) du bâtiment présente un guidage de l'air frais et un guidage de l'air d'échappement, un échangeur de chaleur air-eau (1, L-W WT 1/2) traversé par l'air d'échappement ou l'air frais et disposé dans le circuit d'eau (9) étant attribué au moins au guidage de l'air d'échappement ou au guidage de l'air frais.

8. Dispositif selon la revendication 7, caractérisé en ce que l'échangeur de chaleur air-eau (1, L-W WT 1/2) comprend un grand nombre de conduites (13) disposées de façon coaxiale et superposée et conçues chacune comme un ensemble de tuyaux en spirale, avec une entrée et une sortie pour chacune, tous les tuyaux (13) étant disposés à une distance les uns des autres, par laquelle l'air du circuit d'air (10) peut circuler, et dont l'entrée et la sortie sont regroupées dans un distributeur (14,14') et sont reliées au circuit d'eau (9).

9. Dispositif selon au moins l'une des revendications 6 à 8, caractérisé en ce que des absorbeurs de collecteurs solaires (2) sont intégrés dans les circuits d'eau (9) et/ou les circuits d'air (10).
